(19) Europäisches Patentamt

European Patent Office

Office européen des brevets

(11) Veröffentlichungsnummer: **0 187 418 B1**

# (12) EUROPÄISCHE PATENTSCHRIFT

(45) Veröffentlichungstag der Patentschrift: **30.09.92**

(21) Anmeldenummer: **85202083.3**

(22) Anmeldetag: **16.12.85**

(51) Int. Cl.⁵: **G02B 6/38**, G02B 6/42

## (54) Vorrichtung zum Positionieren eines optischen Wellenleiters.

(30) Priorität: **08.01.85 DE 3500356**

(43) Veröffentlichungstag der Anmeldung:
**16.07.86 Patentblatt 86/29**

(45) Bekanntmachung des Hinweises auf die
Patenterteilung:
**30.09.92 Patentblatt 92/40**

(84) Benannte Vertragsstaaten:
**DE FR GB**

(56) Entgegenhaltungen:
**DE-A- 3 212 576**
**FR-A- 2 547 524**
**FR-A- 2 548 390**
**US-A- 3 473 466**

**PATENT ABSTRACTS OF JAPAN, Band 6, Nr.
104 (P-122)[982], 15. Juni 1982; & JP-A-57 35
814**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Kaspar, Herbert
Bodelschwinghstrasse 3
W-5100 Aachen(DE)**
Erfinder: **Lennartz, Manfred
Duisburger Strasse 62
W-5000 Köln 90(DE)**
Erfinder: **Oepen, Heinrich
Wenauer Strasse 6
W-5190 Stolberg(DE)**
Erfinder: **Wehr, Hermann, Dr. Dipl.-Phys.
Roermonder Strasse 406
W-5100 Aachen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

**Beschreibung**

Die Erfindung betrifft eine Vorrichtung zum Positionieren eines optischen Wellenleiters gegenüber einer Referenzebene, wobei die Referenzebene in einer Bezugsposition örtlich festgelegt und der optische Wellenleiter mittels einer elektromechanischen Biegeanordnung gegenüber der Referenzebene verstellbar angeordnet ist.

Eine Referenzebene kann beispielsweise ein zweiter optischer Wellenleiter, eine Lichtquelle oder auch ein Lichtempfänger sein. Eine einstellbare gegenseitige Positionierung z.B. der Stirnflächen zweier optischer Wellenleiter ist für zahlreiche meßtechnische Anwendungen von Bedeutung. Beispielsweise kann die Größe des lichtführenden Bereichs von Lichtleitfasern durch den kontrollierten axialen Versatz zweier sich stirnseitig gegenüberstehender Lichtleitfasern bestimmt werden (sogenannte Verkopplungsmethode). Dabei sind sowohl die Führungsgenauigkeit des Verstellgliedes als auch die Einstellgenauigkeit des Versatzes kritische Größen, die im sub-$\mu$m-Bereich liegen. Weiterhin erfordert die Verkopplungsmethode eine sehr gute Qualität der beiden Faserstirnflächen hinsichtlich ihrer Parallelität und Oberflächenrauhigkeit; dies umsomehr, je mehr der Brechungsindex des Mediums zwischen den Faserstirnflächen von dem der Lichtleitfasern abweicht.

Der effiziente Einsatz von optischen Wellenleitern hängt bei allen Anwendungsfällen davon ab, daß die Stirnflächen der optischen Wellenleiter reproduzierbar genau positioniert werden können. Hierzu sind z.B. mechanische Einrichtungen, wie beispielsweise x-y-z-Translatoren, konzentrische Rohrleitungen oder V-Nut-Anordnugnen im Einsatz. Derartige mechanische Positioniereinrichtungen haben Nachteile wie z.B. ein gewisses Bewegungsspiel zwischen den Vorrichtungsteilen, Hystereseeffekte, relativ hohe Herstellungskosten und darüberhinaus häufig auch eine mangelnde Zuverlässigkeit und Betriebssicherheit.

Aus DE-A 32 12 576 ist eine Vorrichtung zum Positionieren eines optischen Wellenleiters gegenüber einer örtlich fixierten Bezugsebene mit einer elektromechanischen Biegeanordnung bekannt, wobei ein Biegeelement eingesetzt wird.

Aus DE-OS 31 03 010 ist eine Vorrichtung zum wählbaren Positionieren des Endes einer optischen Faser längs eines Bereiches von Positionen bekannt, wobei diese bekannte Einrichtung eine Biegeanordnung umfaßt, die wenigstens ein piezoelektrisches Biegeelement aufweist und bei der ein erstes Ende derselben zur Verbindung mit einem oder mehreren Enden von einer oder mehreren optischen Fasern angeordnet ist, während sich ein zweites Ende derselben in einer Bezugsposition befindet. Eine geeignete Anwendung von elektrischer Energie auf das piezoelektrische Biegeelement bewirkt, daß dieses eine gewählte Position längs des Bereiches von Positionen einnimmt. Es ist mit dieser Einrichtung, wie auch mit der Vorrichtung gemäß DE-A 32 12 576 nicht möglich, eine relative Verschiebung der Stirnflächen zweier optischer Fasern vorzunehmen, ohne daß sich der Kippwinkel zwischen den Stirnflächen ändert, es treten bei diesen bekannten Einrichtungen also Winkelfehler auf.

Der Erfindung liegt die Aufgabe zugrunde, eine Vorrichtung zum Positionieren eines optischen Wellenleiters gegenüber einer Referenzebene zu schaffen, die eine kontinuierliche relative Verschiebung der Stirnfläche des optischen Wellenleiters in drei zueinander senkrechten Richtungen (x,y,z) ohne Winkelfehler erlaubt.

Diese Aufgabe wird erfindungsgemäß dadurch gelöst, daß die Biegeanordnung drei Paare von elektromechanischen Biegeelementen in jeweils Parallelfederanordnung umfaßt, deren auslenkbare Enden mittelbar zur Verbindung mit dem freien Ende des zu positionierenden optischen Wellenleiters eingerichtet sind, wobei die Biegeelementenpaare so zueinander angeordnet sind, daß sie eine Bewegung des optischen Wellenleiters in drei zueinander senkrechten Richtungen (x,y,z) bewirken und wobei auf den Flächen der elektrostriktiven Biegeelemente, die normal zur jeweiligen Bewegungsrichtung stehen, in ihrem Mittelbereich unterbrochene und dort wechselseitig über Kreuz elektrisch verbundene Elektroden angebracht sind.

Nach einer vorteilhaften Weiterbildung der Erfindung sind die drei Biegeelementpaare jeweils mit ihren Enden in gegenüberliegende Halteblöcke eingepaßt, wobei jedes Biegeelementpaar jeweils einen Halteblock als örtlichen Fixpunkt hat und den gegenüberliegenden Halteblock über seine Auslenkung verstellt, derart, daß der über das erste in einem Halteblock fixierte Biegeelementpaar verstellte Halteblock den Fixpunkt des zweiten Biegeelementpaares und der vom zweiten Biegeelementpaar verstellte Halteblock den Fixpunkt des dritten Biegeelementpaares darstellt, wobei das dritte Biegelementpaar einen vierten Halteblock verstellt, der eine Bewegung in drei zueinander senkrechten Richtungen (x,y,z) erfährt.

Mit einer derartigen Anordnung von Biegelementen in Parallelfederanordnung ist der Vorteil verbunden, daß ein mit dem vierten Halteblock verbundener optischer Wellenleiter in drei zueinander senkrechten Richtungen ohne Winkelfehler auf besondere einfache und sicher funktionierende Weise verstellt werden kann.

Nach einer vorteilhaften Weiterbildung der Erfindung sind zur Bestimmung der jeweiligen Position der drei Biegelementpaare drei Wegnaufnehmer vorgesehen. Hiermit ist der Vorteil verbunden, daß die relative Position des gegenüber der örtlich fixierten Referenzebene zu positionierenden optischen Wellenleiters kontinuierlich erfaßbar ist.

Nach einer weiteren vorteilhaften Ausgestaltung der Vorrichtung nach der Erfindung stehen das Ende des optischen Wellenleiters und die Referenzebene miteinander optisch in Verbindung über ein mit einem Medium, das einen ähnlichen Brechungsindex wie der zu positionierende optische Wellenleiter hat, gefülltes elastisches Bindeglied. Hiermit ist der Vorteil verbunden, daß es beispielsweise bei der Verkopplung von optischen Wellenleitern nicht zwingend erforderlich ist, daß die Stirnflächen der zu verkoppelnden optischen Wellenleiter eine besonders hohe Qualität hinsichtlich ihrer Parallelität und ihrer Oberflächenrauhigkeit aufweisen; das Problem der Stirnflächen-Endpräparation wird durch die Auswahl eines überbrückenden Mediums, dessen Brechungsindex an den der zu verkoppelnden Faser angepaßt ist, sehr verringert.

Die mit der Erfindung erzielten Vorteile bestehen insbesondere darin, daß die Herstellungskosten und der konstruktive Aufwand für einen x-y-z-Linearversteller sehr gering sind. Dadurch, daß die Positionierung eines optischen Wellenleiters gegenüber einer Referenzebene, also beispielsweise gegenüber einem zweiten optischen Wellenleiter oder gegenüber einer Lichtquelle oder gegenüber einem Detektor durch Biegeelemente aus elektrostriktivem Material, z.B. piezoelektrischem, in einer sogenannten Parallelfederanordnung bewirkt wird, kann die Verstellung ohne Winkelfehler spielfrei und ohne Reibung erfolgen, wobei - je nach Abstand und Anordnung der drei Biegeelementpaare zueinander - Verstellwege von einigen Millimetern möglich sind. Durch das Fehlen von mechanischen Führungen und sonstigen Verschleißteilen sind eine hohe Führungsgenauigkeit und Lebensdauer gegeben.

Mit insbesondere der Elektrodenausgestaltung ist der Vorteil verbunden, daß die einzelnen Biegeelemente der Biegeelementpaare eine lineare Bewegung ohne jede mechanische Verspannung ausführen.

Anhand der Zeichnung wird ein Ausführungsbeispiel der Erfindung beschrieben und in ihrer Wirkungsweise erläutert. Es zeigen:

Fig. 1 Funktionsprinzip der erfindungsgemäß eingesetzten Parallelführung von zwei elektromechanischen Biegeelementen (Biegeelementpaar)

Fig. 2 Seitenansicht einer Vorrichtung gemäß der Erfindung

Fig. 3 Schnitt durch eine Vorrichtung gemäß der Erfindung entsprechend der Schnittlinie III-III in Figur 2

Fig. 4 Schnitt durch eine Vorrichtung gemäß der Erfindung entsprechend der Schnittlinie IV-IV in Figur 3.

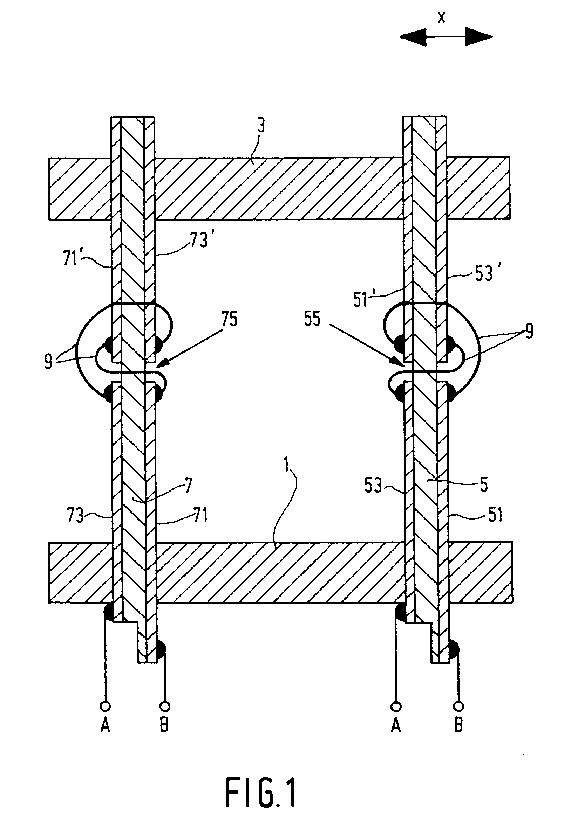

Mit Fig. 1 wird das Prinzip erläutert, wie über ein Biegeelementpaar, also über zwei Biegeelemente in Parallelfederanordnung, ein Vorrichtungsteil in einer Richtung, z.B. x-Richtung, ohne Winkelfehler bewegt wird. In zwei einander gegenüberliegende Halteblöcke 1 und 3 (vergleiche Figur 1) sind zwei bilaminare keramische Biegeelemente 5 und 7, die ein Biegeelementpaar bilden, eingepaßt. Der Halteblock 1 ist feststehend, d.h. örtlich fixiert, montiert, der Halteblock 3 ist über die Biegeelemente 5 und 7 bewegbar. Die Verstellung des Halteblocks 3 längs der x-Achse wird bewirkt durch Anlegen einer geeigneten elektrischen Spannung geeigneter Polarität an Klemmen A und B. Die elektrische Spannung wirkt auf beidseitige Elektroden 51,53,51',53',71,73,71',73' der Biegeelemente 5 und 7, die im Mittelbereich 55 und 75 unterbrochen und dort wechselseitig über Kreuz elektrisch durch z.B. eine Verdrahtung 9 verbunden sind, so daß jeweils die Elektrodenbereiche 51 und 51', 53 und 53', 71 und 71' und 73 und 73' zusammenwirken. Für einen x-y-z-Linearversteller sind drei derartige Biegeelementpaare erforderlich. Für das in Figur 1 dargestellte Biegeelementpaar ist die Verschiebungsrichtung x mit Pfeilen gekennzeichnet.

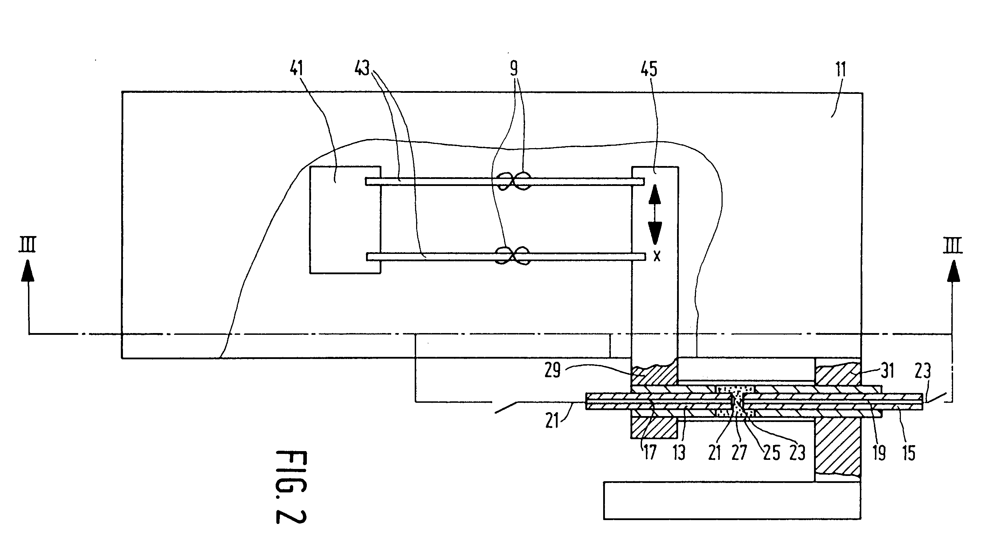

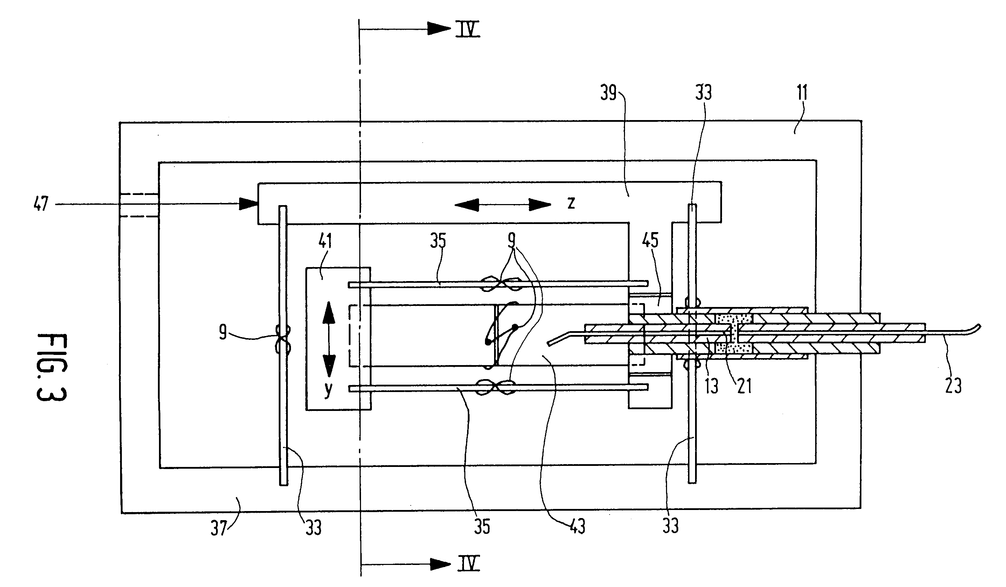

In den Figuren 2 bis 4 ist eine Vorrichtung gemäß der Erfindung in Seitenansicht und in zwei Schnittansichten (gemäß den Schnittlinien III-III in Figur 2 und IV-IV in Figur 3) dargestellt. Diese Vorrichtung ist beispielsweise so eingerichtet, daß zwei optische Wellenleiter gegeneinander positioniert werden.

Figur 2 zeigt die Vorrichtung gemäß der Erfindung in Seitenansicht mit einem Gehäuse 11, aus dem Stifte 13 und 15 mit Kapillarbohrungen 17 und 19 als Aufnahmevorrichtung für zwei gegeneinander zu positionierende optische Wellenleiter 21 und 23 herausragen. Die gegeneinander zu positionierenden Wellenleiter 21 und 23 sind optisch miteinander verkoppelt über einen flexiblen Schlauch 25, der im Bereich der Stirnflächen 21' und 23' der optischen Wellenleiter 21 und 23 mit einem flüssigen Medium 27 gefüllt ist, dessen Brechungsindex dem der zu positionierenden optischen Wellenleiter 21 und 23 angepaßt ist. Die Stifte 13 und 15 sind in Bohrungen von Zapfen 29 und 31 fixiert und austauschbar. Die Füllung des Schlauches 25 mit dem Medium 27 erfolgt durch Herausnahme einer der beiden Stifte 13 oder 15. Als Medium zur Anpassung des Brechungsindex ist z.B. Glycerin geeignet. An einem Halteblock 41 ist ein Biegeelementpaar 43 befestigt und bewirkt nach Anlegen einer geeigneten Spannung geeigneter Polarität eine Verstellung eines Halteblocks 45 in x-Richtung.

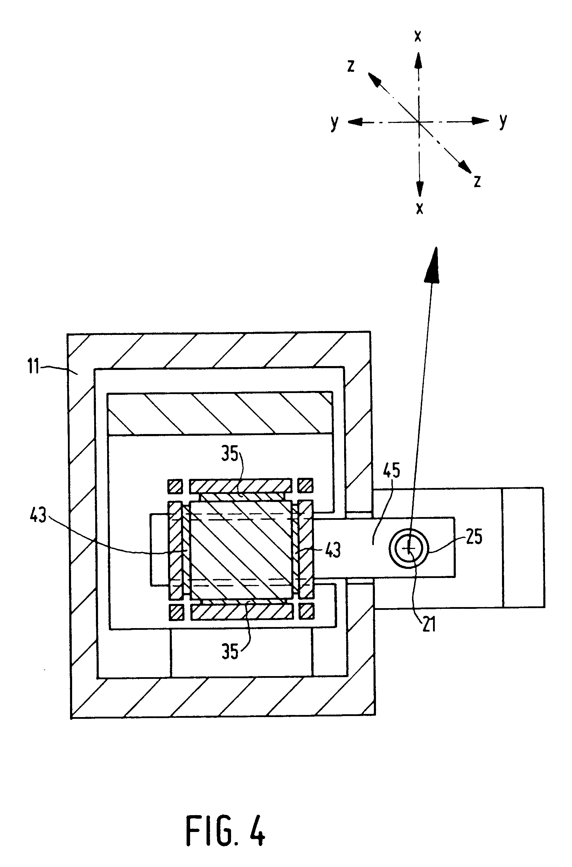

Figur 3 zeigt den Schnitt durch die Vorrichtung gemäß Figur 2 entsprechend der Schnittlinie III-III. In dieser Schnittansicht sind drei für eine x-y-z-Bewegung erforderliche Biegeelementpaare mit den Bezugszeichen 33,35 und 43 dargestellt. Als örtlich festgelegter Halteblock für das Biegeelementpaar 33 wirkt ein Teil 37 des Gehäuses 11. Das Biegeelementpaar 33 bewirkt nach Anlegen einer geeigneten elektrischen Spannung geeigneter Polarität eine Verstellung eines Halteblocks 39 in z-Richtung, das Biegeelementpaar 35 ist am Halteblock 39 fixiert und bewirkt eine Verstellung eines Halteblocks 41 in y-Richtung, das Biegeelementpaar 43 ist am Halteblock 41 befestigt und bewirkt eine Verstellung des Halteblocks 45 in x-Richtung. Die für das Betreiben der Biegeelemente erforderliche Spannungsquelle ist in der Zeichnung nicht dargestellt. Durch mechanische Verbindung des Stiftes 13 mit dem bewegbaren Halteblock 45 kann der in den Stift 13 eingesetzte optische Wellenleiter 21 gegenüber dem am Gehäuse 11 fest positionierten Wellenleiter 23 verschoben werden, wenn an die Biegeelemente der Biegeelementpaare 33,35,43 eine geeignete elektrische Spannung angelegt wird. Mit dem Bezugszeichen 9 ist die wechselseitige Verdrahtung der Elektroden der die Biegeelementpaare 33,35 oder 43 bildenden Biegeelemente bezeichnet (vergleiche hierzu auch das Beispiel in Figur 1). Mit dem Bezugszeichen 47 ist ein Wegaufnehmer dargestellt, der zusammenwirkt mit der Bewegung des Biegeelementpaares 33. Der Wegaufnehmer 47 ist fest verbunden mit dem Gehäuse 11 und mißt die durch das Biegeelementpaar 33 bewirkte Verlagerung des Halteblocks 39. Für die Messung der durch die Biegeelementpaare 35 und 43 hervorgerufene Verstellung der Halteblöcke 41 und 45 sind ebenfalls Wegaufnehmer vorgesehen, jedoch nicht dargestellt in der Zeichnung.In Figur 4 ist ein Schnitt durch die Vorrichtung gemäß Figur 3 entsprechend der Schnittlinie IV-IV dargestellt. Die Bezugszeichen in Figur 4 entsprechen den zu Figur 3 beschriebenen Vorrichtungsteilen.

Es ist hinsichtlich der Genauigkeit von Vorteil, die Position des beschriebenen x-y-z-Linearverstellers durch drei Wegaufnehmer zu bestimmen. Das Ausgangssignal der Wegaufnehmer kann als Ist-Wert für eine Positionsregelung benutzt werden, die eventuelle Spannungsschwankungen in der Versorgungsspannung für die Biegeelemente oder Hystereseerscheinungen ausregelt. Die gewünschte Position des Linearverstellers ist dann nur noch als Soll-Wert in den Regelkreis einzugeben. Zur Regelung werden zweckmäßigerweise analoge Regler bzw. eine digitale Regelung mittels eines Digitalrechners eingesetzt.

Als elektromechanische Biegeelemente wurden in dem beschriebenen Ausführungsbeispiel bilaminare keramische Biegeelemente eingesetzt. Derartige Biegeelemente können beispielsweise aus einer piezoelektrischen Keramik, z.B. auf Basis von Blei/Erdalkalimetall-Titanat/Zirkonat bestehen. Es ist im Rahmen des fachmännischen Handelns auch möglich, Biegeelemente aus elektrostriktivem Material einzusetzen.

Als Material für den elastischen Schlauch 25 sind gummielastische Stoffe vorteilhaft. Die hier beschriebene Vorrichtung kann z.B. mit Vorteil eingesetzt werden zur Bestimmung der Modenfeldweite von Monomode-Lichtwellenleitern nach der Verkopplungsmethode.

Die beschriebene Verstellvorrichtung kann z.B. auch zum Positionieren und Justieren anderer leichter Bauteile eingesetzt werden.

## Patentansprüche

1. Vorrichtung zum Positionieren eines optischen Wellenleiters gegenüber einer Referenzebene, wobei die Referenzebene in einer Bezugsposition örtlich festgelegt und der optische Wellenleiter mittels einer elektromechanischen Biegeanordnung gegenüber der Referenzebene verstellbar angeordnet ist, dadurch gekennzeichnet, daß die Biegeanordnung drei Paare (33,35,43) von elektrostriktiven Biegeelementen (5,7) in jeweils Parallelfederanordnung umfaßt, deren auslenkbare Enden mittelbar zur Verbindung mit dem freien Ende des zu positionierenden optischen Wellenleiters (21) eingerichtet sind, wobei die Biegeelementpaare so zueinander angeordnet sind, daß sie eine Bewegung des optischen Wellenleiters in drei zueinander senkrechten Richtungen (x,y,z) bewirken und wobei auf den Flächen der Biegeelemente (5,7), die normal zur jeweiligen Bewegungrichtung stehen, in ihrem Mittelbereich (55,75) unterbrochene und dort wechselseitig über Kreuz elektrisch verbundene Elektroden (51,51',53, 53',71,71',73,73') angebracht sind.

2. Vorrichtung nach Anspruch 1, dadurch gekennzeichnet, daß die drei Biegeelementpaare (33,35,43) jeweils mit ihren Enden in gegenüberliegende Halteblöcke (37,39,41,45) eingepaßt sind, wobei jedes Biegeelementpaar jeweils einen Halteblock als örtlichen Fixpunkt hat und den gegenüberliegenden Halteblock über seine Auslenkung verstellt, derart, daß der über das erste in einem Halteblock (37) fixierte Biegeelementpaar (33) verstellte Halteblock (39) den Fixpunkt des zweiten Biegeelementpaares (35) und der vom zweiten Biegeelementpaar verstellte Halteblock (41) den Fixpunkt des dritten Biegeelementpaares (43) darstellt, wobei das dritte Biegeelementpaar einen vierten Halteblock (45) verstellt, der eine Bewegung in drei zueinander senkrechten Richtungen (x,y,z) erfährt.

3. Vorrichtung nach Anspruch 1, dadurch gekennzeichnet,
daß die Biegeelemente der Biegeelementpaare (33,35,43) aus piezoelektrischem Material bestehen.

4. Vorrichtung nach Anspruch 3, dadurch gekennzeichnet,
daß als Biegeelemente bilaminare keramische Biegeelemente eingesetzt sind.

5. Vorrichtung nach Anspruch 1, dadurch gekennzeichnet,
daß zur Bestimmung der jeweiligen Position der drei Biegeelementpaare (33,35,43) drei Wegaufnehmer (47) vorgesehen sind.

6. Vorrichtung nach Anspruch 2, dadurch gekennzeichnet,
daß an dem vierten über die Biegeelementpaare (33,35,43) bewegbaren Halteblock (45) eine Aufnahme (13) für die Fixierung des zu positionierenden Endes des optischen Wellenleiters (21) vorgesehen ist.

7. Vorrichtung nach Anspruch 2, dadurch gekennzeichnet,
daß an dem ersten örtlich fixierten Halteblock (37) eine Aufnahme (15) für die Fixierung des freien Endes eines zweiten optischen Wellenleiters (23) vorgesehen ist.

8. Vorrichtung nach Anspruch 1, dadurch gekennzeichnet,
daß das Ende des optischen Wellenleiters (21) und die Referenzebene miteinander optisch in Verbindung stehen über ein, mit einem Medium (27), das einen ähnlichen Brechungsindex wie der zu positionierende optische Wellenleiter hat, gefülltes elastisches Bindeglied (25).

9. Vorrichtung nach Anspruch 8, dadurch gekennzeichnet,
daß das elastische Bindeglied (25) ein über die Aufnahmen (13,15) geschobener elastischer Schlauch ist.

10. Vorrichtung nach den Ansprüchen 6 und 7, dadurch gekennzeichnet,
daß die Aufnahmen (13,15) als auswechselbar fixierte Stifte vorgesehen sind.

## Claims

1. A device for positioning an optical fibre with respect to a defined reference plane, the optical fibre being arranged so as to be displaceable with respect to the reference plane by means of an electromechanical deflector device, characterized in that the deflector device comprises three airs (33,35,43) of electrostrictive deflector elements (5,7), each pair being arranged like a pair of parallel leaf springs, the deflectable ends thereof being indirectly connectable to the free end of the optical fibre (21) to be Positioned, the pairs of deflector elements being arranged with respect to one another in such a manner that they move the optical fibre in three mutually perpendicular directions (x,y,z), and electrodes (51,51',53,53',71,71',73,73') which are interrupted at their central area (55,75) and which are cross-wise electrically interconnected being provided on the surfaces of the deflector elements (5,7), which surfaces extend perpendicularly to the direction of movement.

2. A device as claimed in Claim 1, characterized in that the ends of the three pairs of deflector elements (3,35,43) are located in respective, oppositely situated retaining blocks (37,39,41,45), each pair of deflector elements having a respective retaining block, as a local fixed point and displacing the oppositely situated retaining block, by way of its deflection, in such a manner that the retaining block (39) which is displaced by the first pair of deflector elements (33) fixed in a retaining block (37) forms the fixed point of the second pair of deflector elements (35) and the retaining block (41) which is displaced by the second pair of deflector elements forms the fixed point of the third pair of deflector elements (43), the third pair of deflector elements displacing a fourth retaining block (45) which performs a displacement in three mutually perpendicular directions (x,y,z).

3. A device as claimed in Claim 1, characterized in that the deflector elements of the pairs of deflector elements (33,35,43) are made of a piezoelectric material.

4. A device as claimed in Claim 3, characterized in that the deflector elements are bilaminar ceramic reflector elements.

5. A device as claimed in Claim 1, characterized in that three position detectors (47) are provided for determining the instantaneous position of the three pairs of deflector elements (33,35,43).

6. A device as claimed in Claim 2, characterized in that the fourth retaining block (45) which is displaceable by the pairs of deflector elements (33,35,43) is provided with a facility (13) for fixing the end of the optical fibre (21) to be positioned.

7. A device as claimed 2, characterized in that the first, locally fixed retaining block (37) is provided with a facility (15) for fixing the free end of a second optical fibre (23).

8. A device as claimed in Claim 1, characterized in that the end of the optical fibre (21) and the reference plane are optically interconnected by means of an elastic coupling element (25) which is filled with a medium (27) having a refractive index which is similar to that of the optical fibre to be positioned.

9. A device as claimed in Claim 8, characterized in that the elastic coupling element (25) is formed by an elastic sleeve which is slid over the facilities (13,15).

10. A device as claimed in Claims 6 and 7, characterized in that the facilities (13,15) are formed by removably secured pins.

**Revendications**

1. Dispositif pour le positionnement d'un guide d'ondes optique par rapport à un plan de référence, le plan de référence étant fixé localement dans une position de référence et le guide d'ondes optique étant monté déplaçable par rapport au plan de référence au moyen d'un dispositif de flexion électromécanique, caractérisé en ce que le dispositif de flexion comprend trois paires (33, 35, 43) d'éléments de flexion électrostrictifs (5, 7) agencées chacune en un montage élastique parallèle, dont les extrémités déplaçables sont conçues pour être reliées indirectement à l'extrémité libre du guide d'ondes optique (21) à positionner, les paires d'éléments de flexion étant disposées l'une par rapport à l'autre d'une manière telle qu'elles assurent un déplacement du guide d'ondes optique dans trois directions perpendiculaires l'une à l'autre (x,y,z), les surfaces des éléments de flexion (5, 7), qui sont perpendiculaires à la direction de mouvement prévue, portant des électrodes (51, 51', 53, 53', 71, 71', 73, 73') interrompues dans leur région médiane (55, 75) et présentant, en cet endroit, une connexion électrique réciproque croisée.

2. Dispositif suivant la revendication 1, caractérisé en ce que les trois paires d'éléments de flexion (33, 35, 43) sont chacune enchâssées par leurs extrémités dans des blocs de retenue opposés (37, 39, 41, 45), chaque paire d'éléments de flexion disposant chaque fois d'un bloc de retenue en tant que point localement fixe et déplaçant le bloc de retenue opposé par sa déflexion de telle sorte que le bloc de retenue (39) déplacé par la première paire d'éléments de flexion (33) fixée dans un bloc de retenue (37) constitue le point fixe de la deuxième paire d'éléments de flexion (35) et que le bloc de retenue (41) déplacé par la deuxième paire d'éléments de flexion constitue le point fixe de la troisième paire d'éléments de flexion (43), la troisième paire d'éléments de flexion déplaçant un quatrième bloc de retenue (45) qui effectue un déplacement dans trois directions perpendiculaires l'une à l'autre (x,y,z).

3. Dispositif suivant la revendication 1, caractérisé en ce que les éléments de flexion des paires d'éléments de flexion (33, 35, 43) sont faits d'une matière piézo-électrique.

4. Dispositif suivant la revendication 3, caractérisé en ce qu'on utilise en tant qu'éléments de flexion des éléments de flexion en céramique bilaminaires.

5. Dispositif suivant la revendication 1, caractérisé en ce que trois capteurs de déplacement (47) sont prévus pour la détermination de la position respective des trois paires d'éléments de flexion (33, 35, 43).

6. Dispositif suivant la revendication 2, caractérisé en ce qu'un élément récepteur (13) pour la fixation de l'extrémité à positionner du guide d'ondes optique (21) est prévu sur le quatrième bloc de retenue (45) déplaçable par la paire d'éléments de flexion (33, 35, 43).

7. Dispositif suivant la revendication 2, caractérisé en ce qu'un élément récepteur (15) pour la fixation de l'extrémité libre d'un second guide d'ondes optique (23) est prévu sur le premier bloc de retenue (37) fixé localement.

8. Dispositif suivant la revendication 1, caractérisé en ce que l'extrémité du guide d'ondes optique (21) et le plan de référence sont en liaison optique l'un avec l'autre par l'intermédiaire d'un élément de liaison élastique (25) rempli d'un milieu (27) qui présente un indice de réfraction semblable à celui du guide d'ondes optique à positionner.

9. Dispositif suivant la revendication 8, caractérisé en ce que l'élément de liaison élastique (25) est un manchon élastique glissé par-dessus les éléments récepteurs (13, 15).

10. Dispositif suivant les revendications 6 et 7, caractérisé en ce que les éléments récepteurs (13, 15) ont la forme de broches fixes remplaçables.

FIG.1

FIG. 2

FIG. 3

FIG. 4